# EUROPEAN PATENT APPLICATION

(11) **EP 4 814 612 A1**
(43) Date of publication of application: **30.09.2026**
(21) Application number: 25190222.7
(22) Date of filing: 17.07.2025
(51) Int. Cl.: G03G 15/20, G03G 15/00, G06N 3/045

(54) **INFORMATION PROCESSING SYSTEM, INFORMATION PROCESSING PROGRAM, AND INFORMATION PROCESSING METHOD**

(30) Priority: 24.03.2025 JP 2025048463
(71) Applicant: FUJIFILM Business Innovation Corp., Minato-ku Tokyo (JP)
(72) Inventor: SEKO, Tomohiro, Ebina-shi, Kanagawa (JP)
(74) Representative: Becker Kurig & Partner Patentanwälte mbB

(57) **Abstract**

An information processing system includes a processor configured to: input, to a first trained model that has been trained in advance in order to output information about printing paper in a case of receiving sensor information including an output of a sensor for the printing paper, new sensor information including an output of the sensor for printing paper to be newly printed, and output information about the printing paper to be newly printed; and input, to a second trained model that has been trained in advance in order to output a fixing temperature of a fixing device in a printing apparatus in a case of receiving input information including information about printing paper, new input information including the information about the printing paper output from the first trained model, and output a fixing temperature of the fixing device in the printing apparatus that is to perform a new print job.

## Description

### BACKGROUND OF THE INVENTION

### (i) Field of the Invention

The present disclosure relates to an information processing system, an information processing program, and an information processing method.

### (ii) Description of Related Art

JP2024-123069A discloses a parameter determination device that includes an acquisition unit that acquires data regarding paper basis weight detected by a sensor, and a determination unit that determines a parameter related to paper processing from the acquired data regarding the paper basis weight based on a program using a learning function using machine learning, in which the data regarding the paper basis weight is data regarding the amount of light transmitted in a case where paper is irradiated with light.

### SUMMARY OF THE INVENTION

In a case where a printing apparatus performs printing, it is necessary to set a fixing temperature of a fixing device to an optimum temperature or to apply an optimum transfer voltage to a transfer unit according to settings of printing paper. It is considered to predict and set the fixing temperature or the transfer voltage according to the settings of the printing paper by using a trained model, but the settings of the printing paper received from a user may be incorrect. Therefore, the fixing temperature or the transfer voltage predicted by the trained model may be inappropriate.

Therefore, an object of the present disclosure is to provide an information processing system, an information processing program, and an information processing method capable of predicting a fixing temperature of a fixing device or a transfer voltage of a transfer unit according to printing paper by using an output of a sensor for the printing paper.

According to a first aspect of the present disclosure, there is provided an information processing system including a processor configured to input, to a first trained model that has been trained in advance in order to output information about printing paper in a case of receiving sensor information including an output of a sensor for the printing paper, new sensor information including an output of the sensor for printing paper to be newly printed, and output information about the printing paper to be newly printed, and input, to a second trained model that has been trained in advance in order to output a fixing temperature of a fixing device in a printing apparatus in a case of receiving input information including information about printing paper, new input information including the information about the printing paper output from the first trained model, and output a fixing temperature of the fixing device in the printing apparatus that is to perform a new print job.

According to a second aspect of the present disclosure, there is provided an information processing system including a processor configured to input, to a first trained model that has been trained in advance in order to output information about printing paper in a case of receiving sensor information including an output of a sensor for the printing paper, new sensor information including an output of the sensor for printing paper to be newly printed, and output information about the printing paper to be newly printed, and input, to a second trained model that has been trained in advance in order to output a transfer voltage to be applied to a transfer unit in a printing apparatus in a case of receiving input information including information about printing paper, new input information including the information about the printing paper output from the first trained model, and output a transfer voltage to be applied to the transfer unit in the printing apparatus that is to perform a new print job.

According to a third aspect of the present disclosure, in the information processing system according to the first or second aspect, the processor may be configured to output a plurality of candidates of the information about the printing paper to be newly printed by inputting the new sensor information to the first trained model, on the printing apparatus that is to perform the new print job or a user terminal, display a screen for receiving a selection of the output candidates of the information about the printing paper from a user, and input the received selection of the candidates of the information about the printing paper to the second trained model.

According to a fourth aspect of the present disclosure, in the information processing system according to any one of the first to third aspects, the processor may be further configured to, on the printing apparatus that is to perform the new print job or a user terminal, display a screen for receiving a request for adjusting the output fixing temperature of the fixing device from a user.

According to a fifth aspect of the present disclosure, in the information processing system according to any one of the first to fourth aspects, the information about the printing paper may include a basis weight of the printing paper, a type of the printing paper, or a brand of the printing paper.

According to a sixth aspect of the present disclosure, there is provided an information processing program causing a computer to execute inputting, to a first trained model that has been trained in advance in order to output information about printing paper in a case of receiving sensor information including an output of a sensor for the printing paper, new sensor information including an output of the sensor for printing paper to be newly printed, and outputting information about the printing paper to be newly printed, and inputting, to a second trained model that has been trained in advance in order to output a fixing temperature of a fixing device in a printing apparatus in a case of receiving input information including information about printing paper, new input information including the information about the printing paper output from the first trained model, and outputting a fixing temperature of the fixing device in the printing apparatus that is to perform a new print job.

According to a seventh aspect of the present disclosure, there is provided an information processing method including inputting, to a first trained model that has been trained in advance in order to output information about printing paper in a case of receiving sensor information including an output of a sensor for the printing paper, new sensor information including an output of the sensor for printing paper to be newly printed, and outputting information about the printing paper to be newly printed, and inputting, to a second trained model that has been trained in advance in order to output a fixing temperature of a fixing device in a printing apparatus in a case of receiving input information including information about printing paper, new input information including the information about the printing paper output from the first trained model, and outputting a fixing temperature of the fixing device in the printing apparatus that is to perform a new print job.

According to the first aspect of the present disclosure, it is possible to predict the fixing temperature of the fixing device according to the printing paper by using the output of the sensor for the printing paper.

According to the second aspect of the present disclosure, it is possible to predict the transfer voltage of the transfer unit according to the printing paper by using the output of the sensor for the printing paper.

According to the third aspect of the present disclosure, it is possible to predict the fixing temperature of the fixing device or the transfer voltage of the transfer unit in accordance with the information about the printing paper received from the user.

According to the fourth aspect of the present disclosure, it is possible to receive a request for adjusting the predicted fixing temperature of the fixing device from the user.

According to the fifth aspect of the present disclosure, it is possible to predict the fixing temperature of the fixing device or the transfer voltage of the transfer unit according to the basis weight of the printing paper, the type of the printing paper, or the brand of the printing paper.

According to the sixth aspect of the present disclosure, it is possible to predict the fixing temperature of the fixing device according to the printing paper by using the output of the sensor for the printing paper.

According to the seventh aspect of the present disclosure, it is possible to predict the fixing temperature of the fixing device according to the printing paper by using the output of the sensor for the printing paper.

### BRIEF DESCRIPTION OF THE DRAWINGS

Exemplary embodiment(s) of the present invention will be described in detail based on the following figures, wherein:
FIG. 1 is a diagram showing a schematic configuration of an information processing system according to the present exemplary embodiment;
FIG. 2A is a block diagram showing a major configuration of an electrical system of a printing apparatus in the information processing system according to the present exemplary embodiment;
FIG. 2B is a diagram showing a schematic configuration of a fixing device of the printing apparatus in the information processing system according to the present exemplary embodiment;
FIG. 2C is a diagram showing a schematic configuration of a transfer unit of the printing apparatus in the information processing system according to the present exemplary embodiment;
FIG. 3 is a block diagram showing a major configuration of an electrical system of a management apparatus and a client computer in the information processing system according to the present exemplary embodiment;
FIG. 4 is a functional block diagram showing a functional configuration of the client computer in the information processing system according to the present exemplary embodiment;
FIG. 5A is a diagram showing an example of a trained first neural network model;
FIG. 5B is a diagram showing an example of a trained second neural network model;
FIG. 6A is a diagram showing an example of a display screen displayed on a user interface of the printing apparatus;
FIG. 6B is a diagram showing an example of a display screen displayed on the user interface of the printing apparatus;
FIG. 6C is a diagram showing an example of a display screen displayed on the user interface of the printing apparatus;
FIG. 7A is a diagram showing an example of a display screen displayed on the user interface of the printing apparatus;
FIG. 7B is a diagram showing an example of a display screen displayed on the user interface of the printing apparatus;
FIG. 8 is a flowchart showing an example of a flow of a learning process performed by the client computer of the information processing system according to the present exemplary embodiment;
FIG. 9 is a flowchart showing an example of a flow of an estimation process performed by the client computer of the information processing system according to a first exemplary embodiment;
FIG. 10A is a diagram showing an example of a display screen displayed on the user interface of the printing apparatus;
FIG. 10B is a diagram showing an example of a display screen displayed on the user interface of the printing apparatus;
FIG. 11 is a diagram showing an example of a trained second neural network model;
FIG. 12A is a diagram showing an example of a display screen displayed on the user interface of the printing apparatus;
FIG. 12B is a diagram showing an example of a display screen displayed on the user interface of the printing apparatus;
FIG. 13 is a flowchart showing an example of a flow of an estimation process performed by the client computer of the information processing system according to a second exemplary embodiment;
FIG. 14A is a diagram showing an example of a display screen displayed on the user interface of the printing apparatus; and
FIG. 14B is a diagram showing an example of a display screen displayed on the user interface of the printing apparatus.

### DETAILED DESCRIPTION OF THE INVENTION

### [First Exemplary Embodiment]

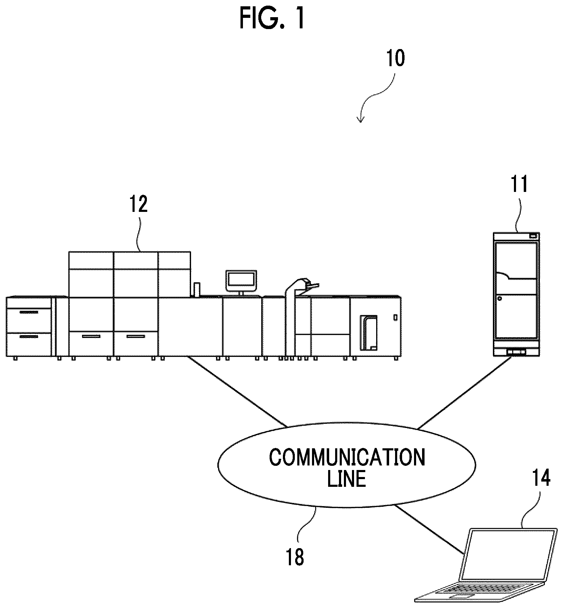

Hereinafter, an example of the present exemplary embodiment will be described in detail with reference to the drawings. In the present exemplary embodiment, an information processing system in which a management apparatus, a printing apparatus, a user terminal, and the like are connected to each other via communication lines such as various networks is described as an example. FIG. 1 is a diagram showing a schematic configuration of an information processing system 10 according to the present exemplary embodiment.

As shown in FIG. 1, the information processing system 10 according to the present exemplary embodiment includes a management apparatus 11, a printing apparatus 12, a client computer 14, and the like. The management apparatus 11, the printing apparatus 12, and the client computer 14 are connected to each other via a communication line 18 such as a local area network (LAN), a wide area network (WAN), the Internet, and an intranet. Then, each of the management apparatus 11, the printing apparatus 12, and the client computer 14 can transmit and receive various data to and from each other via the communication line 18. In the present exemplary embodiment, a print instruction is sent from the client computer 14 to the printing apparatus 12 via the management apparatus 11, an image corresponding to the print instruction is formed in the printing apparatus 12. The client computer 14 is an example of a user terminal.

In FIG. 1, one management apparatus 11, one printing apparatus 12, and one client computer 14 are shown, but each of the apparatuses may be plural or any of the apparatuses may be plural.

The printing apparatus 12 according to the present exemplary embodiment has a plurality of functions such as a printing function of performing printing processing and a post-processing function of performing post-processing on printed paper. The plurality of functions may include a scanning function of scanning a manuscript to obtain image information representing the manuscript, a duplicating function of duplicating an image recorded in the manuscript on paper, a facsimile function of transmitting and receiving various data via a telephone line (not shown), a transfer function of transferring manuscript information such as the image information scanned by the scanning function, and an accumulating function of accumulating the manuscript information such as the scanned image information.

In the following description, the facsimile function may be referred to as a fax, the scanning function may be referred to as a scan, the printing function may be referred to as a print, and the duplicating function may be referred to as a copy.

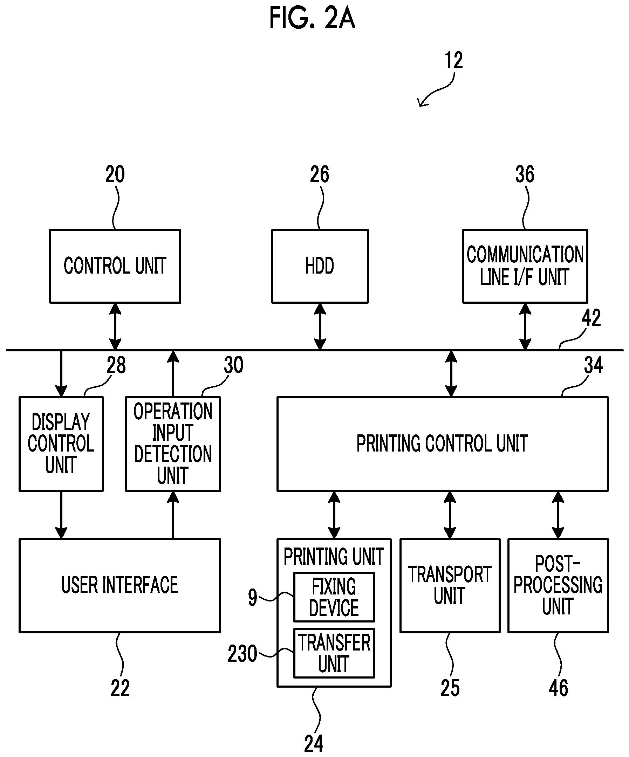

FIG. 2A is a block diagram showing a major configuration of an electrical system of the printing apparatus 12 in the information processing system 10 according to the present exemplary embodiment.

As shown in FIG. 2A, the printing apparatus 12 according to the present exemplary embodiment includes a control unit 20. The control unit 20 may include a central processing unit (CPU), a read only memory (ROM), and a random access memory (RAM).

Meanwhile, the printing apparatus 12 according to the present exemplary embodiment includes a hard disk drive (HDD) 26 that stores various data, application programs, and the like. In addition, the printing apparatus 12 includes a display control unit 28 that is connected to a user interface 22 and that controls display of various operation screens and the like on a display of the user interface 22. In addition, the printing apparatus 12 includes an operation input detection unit 30 that is connected to the user interface 22 and that detects an operation instruction input via the user interface 22. In the printing apparatus 12, the HDD 26, the display control unit 28, and the operation input detection unit 30 are electrically connected to a system bus 42. In the printing apparatus 12 according to the present exemplary embodiment, the HDD 26 is applied as a storage unit, but the present disclosure is not limited to this, and a non-volatile storage unit such as a flash memory may be applied. In addition, in the present exemplary embodiment, a touch panel that can perform display and operation input is applied to the user interface 22, but the present disclosure is not limited to this, and a user interface in which a display and an operation unit are separate may be applied.

In addition, the printing apparatus 12 according to the present exemplary embodiment includes a printing control unit 34 that controls printing processing by a printing unit 24, transport of paper to the printing unit 24 by a transport unit 25, and post-processing by a post-processing unit 46. The printing apparatus 12 may include a scanning control unit that controls an optical image scanning operation by a manuscript scanning unit and a manuscript feeding operation by a manuscript transport unit. In addition, the printing apparatus 12 includes a communication line interface (I/F) unit 36 that is connected to the communication line 18 and that transmits and receives communication data to and from other external apparatuses such as the client computer 14 connected to the communication line 18. In addition, the printing apparatus 12 may include a facsimile interface (I/F) unit that is connected to a telephone line (not shown) and that transmits and receives facsimile data to and from a facsimile apparatus connected to the telephone line. In addition, the printing apparatus 12 may include a transmission and reception control unit that controls transmission and reception of the facsimile data via a facsimile I/F unit 38. In the printing apparatus 12, the printing control unit 34 and the communication line I/F unit 36 are electrically connected to the system bus 42.

The printing unit 24 fixes a toner image transferred from a photoreceptor onto printing paper by using an electrophotographic method. The printing unit 24 includes a transfer unit 230 that transfers a toner image of each color onto recording paper, and a fixing device 9 that fixes, onto the printing paper, the toner image transferred onto the printing paper.

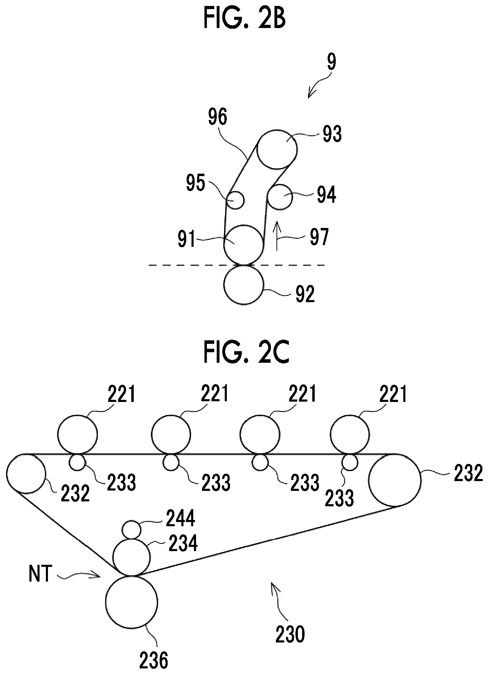

As shown in FIG. 2B, the printing paper onto which the toner image has been transferred is heated and pressurized by the fixing device 9, so that the toner image is fixed onto the printing paper.

Specifically, the fixing device 9 includes a heating roll 91, a pressurizing roll 92, a drive roll 93, an external heating roll 94, an auxiliary roll 95, and a fixing belt 96. The fixing belt 96 is stretched around the heating roll 91 and the drive roll 93 and rotates in a direction of an arrow 97, for example, following rotation of the drive roll 93.

The heating roll 91 has a heat generating element therein, and heats the fixing belt 96 that rotates while in contact with the heating roll 91 with heat emitted from the heat generating element. The drive roll 93 is rotationally driven by a motor (not shown) and rotates the fixing belt 96 in the direction of the arrow 97 by using a frictional force with the fixing belt 96 that is stretched around the drive roll 93. In addition, the external heating roll 94 includes a heat generating element as with the heating roll 91, and heats the fixing belt 96 from a side opposite to a surface of the fixing belt 96 heated by the heating roll 91. The pressurizing roll 92 is disposed at a position facing the heating roll 91, and transports the printing paper while sandwiching the printing paper onto which the toner image is transferred and the fixing belt 96 in a fixing nip portion formed by the pressurizing roll 92 and the heating roll 91. In the fixing nip portion, the fixing belt 96 heated by the heating roll 91 is pressed against the printing paper onto which the toner image is transferred, and the heat of the fixing belt 96 promotes drying of the toner image, thereby fixing the toner image onto the printing paper.

As long as the toner image is fixed onto the printing paper while being pressurized, the configuration of the fixing device is not limited. For example, the fixing device 9 may be in a form in which the fixing belt 96 is attached around the heating roll 91. In this case, the drive roll 93, the external heating roll 94, and the auxiliary roll 95 are unnecessary.

As shown in FIG. 2C, the transfer unit 230 has a function of primarily transferring, onto an intermediate transfer body, a toner image of a photoconductor drum 221 of each color in a superimposed manner and then secondarily transferring the superimposed toner image onto the recording paper. The transfer unit 230 includes a transfer belt 231, a plurality of rolls 232, a primary transfer roll 233, a secondary transfer roll 234, and a transfer cylinder 236. Further, the transfer unit 230 includes an application roll 244 that applies a transfer voltage to the secondary transfer roll 234.

The transfer belt 231 is endless and is wound around the plurality of rolls 232 and the secondary transfer roll 234 so as to have an inverted triangular shape. The transfer belt 231 is circulated by rotationally driving at least one of the plurality of rolls 32.

The primary transfer roll 233 is disposed on an opposite side of the photoconductor drum 221 of each color with the transfer belt 231 interposed therebetween. In addition, the primary transfer roll 233 has a function of transferring, onto the transfer belt 231, the toner image formed on the photoconductor drum 221 at a primary transfer position T between the photoconductor drum 221 and the primary transfer roll 233.

The transfer cylinder 236 has a circular cross-sectional shape and is disposed on an opposite side of the secondary transfer roll 234 with the transfer belt 231 interposed therebetween. The transfer cylinder 236 has a function of transferring, onto the recording paper, the toner image transferred onto the transfer belt 231 at a secondary transfer position NT between the transfer belt 231 and the transfer cylinder 236.

With the above configuration, the printing apparatus 12 according to the present exemplary embodiment uses the control unit 20 to execute control of display of an operation screen and information, such as various messages, on the display of the user interface 22 via the display control unit 28. In addition, the printing apparatus 12 uses the control unit 20 to execute each of the control of the operation of the printing unit 24, the transport unit 25, and the post-processing unit 46 via the printing control unit 34, and the control of the transmission and reception of the communication data via the communication line I/F unit 36. Further, the printing apparatus 12 uses the control unit 20 to ascertain operation content in the user interface 22 based on operation information, which is detected by the operation input detection unit 30, and to execute various kinds of control based on the operation content.

As an example of the applications stored in the HDD 26, in the present exemplary embodiment, an application that executes a function such as printing is included.

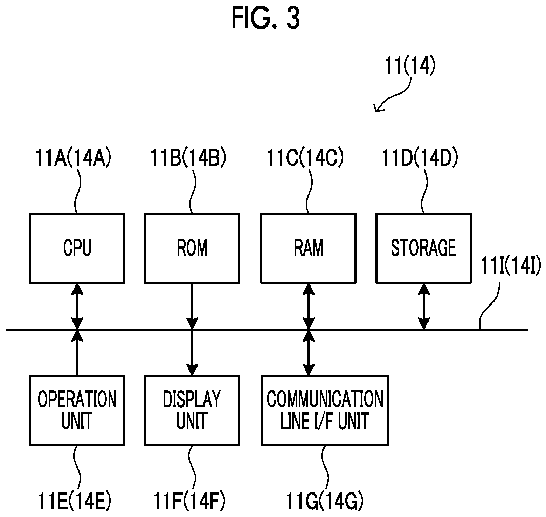

Subsequently, a major configuration of an electrical system of the management apparatus 11 and the client computer 14 according to the present exemplary embodiment will be described. FIG. 3 is a block diagram showing the major configuration of the electrical system of the management apparatus 11 and the client computer 14 in the information processing system 10 according to the present exemplary embodiment. Since the management apparatus 11 and the client computer 14 have a general computer configuration, the management apparatus 11 will be described below as a representative example.

As shown in FIG. 3, the management apparatus 11 according to the present exemplary embodiment includes a CPU 11A as an example of a processor, a ROM 11B, a RAM 11C, a storage 11D, an operation unit 11E, a display unit 11F, and a communication line interface (I/F) unit 11G. The CPU 11A controls the overall operation of the management apparatus 11. The ROM 11B stores various control programs, various parameters, and the like in advance. The RAM 11C is used as a work area or the like in a case where various programs are executed by the CPU 11A. The storage 11D stores various data, application programs, and the like. The operation unit 11E is used to input various types of information. The display unit 11F is used to display the various types of information. The communication line I/F unit 11G is connected to the communication line 18 and transmits and receives various data to and from other apparatuses connected to the communication line 18. In addition, the communication line I/F unit 11G may be configured to be capable of directly communicating with each device by using various well-known wireless communications. Each unit of the management apparatus 11 described above is electrically connected to each other by a system bus 11I. In the management apparatus 11 according to the present exemplary embodiment, the storage 11D is applied as a storage unit, but, as an example of the storage, a non-volatile storage unit, such as a hard disk drive (HDD) or a flash memory, is applied.

With such a configuration, in the management apparatus 11 according to the present exemplary embodiment, the CPU 11A executes accesses to the ROM 11B, the RAM 11C, and the storage 11D, acquisition of various data via the operation unit 11E, and display of various types of information on the display unit 11F. In addition, the management apparatus 11 executes control of transmission and reception of the communication data via the communication line I/F unit 11G using the CPU 11A.

In the information processing system 10 having the above-described configuration, the management apparatus 11 manages a series of manufacturing processes. The series of manufacturing processes includes, for example, production process, a prepress process, a plate-making process, a printing process, a finishing process, and a distribution process.

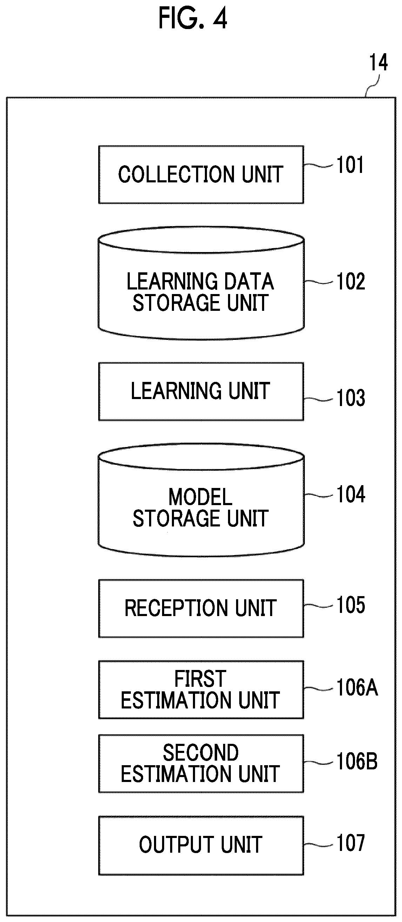

Next, a functional configuration of the client computer 14 will be described. FIG. 4 is a block diagram showing an example of the functional configuration of the client computer 14.

Functionally, as shown in FIG. 4, the client computer 14 includes a collection unit 101, a learning data storage unit 102, a learning unit 103, a model storage unit 104, a reception unit 105, a first estimation unit 106A, a second estimation unit 106B, and an output unit 107.

The collection unit 101 collects learning data including a pair of input information that includes information about the printing paper and a fixing temperature of a fixing device in a printing apparatus, the pair being experimentally obtained. For example, a developer of the printing apparatus experimentally obtains a pair of input information that includes information about the printing paper and an optimum fixing temperature of the fixing device in the printing apparatus for the input information.

The collection unit 101 collects first learning data including a pair of sensor information that includes an output of a sensor for the printing paper and information about the printing paper, the pair being experimentally obtained. For example, the developer of the printing apparatus experimentally obtains a pair of sensor information that includes an output of the sensor for the printing paper and information about the printing paper.

The sensor information includes an output of the sensor for the printing paper. The sensor for the printing paper is specifically a sensor that measures reflected light or transmitted light in a case where the printing paper is irradiated with light, and includes, for example, a spectroscopic sensor and an image sensor.

The management apparatus 11 has experimental information data including a pair of sensor information that includes an output of a sensor for the printing paper and information about the printing paper, the pair being experimentally obtained.

The collection unit 101 collects, from the experimental information held by the management apparatus 11, pairs of sensor information that includes an output of the sensor for the printing paper and information about the printing paper, as the first learning data.

The collection unit 101 collects second learning data including a pair of input information that includes information about the printing paper and a fixing temperature of a fixing device in a printing apparatus, the pair being experimentally obtained. For example, a developer of the printing apparatus experimentally obtains a pair of input information that includes information about the printing paper and an optimum fixing temperature of the fixing device in the printing apparatus for the input information.

The input information may include information about the printing paper. The information about the printing paper may include a basis weight of the printing paper or a type of the printing paper. Specifically, the type of printing paper includes coated paper, matte paper, uncoated paper, and fine paper.

The management apparatus 11 has experimental information including a pair of input information that includes information about the printing paper and a fixing temperature of a fixing device in a printing apparatus, the pair being experimentally obtained.

The collection unit 101 collects, from the experimental information held by the management apparatus 11, pairs of input information that includes information about the printing paper and a fixing temperature of the fixing device in the printing apparatus, as the second learning data.

The learning data storage unit 102 stores a plurality of first learning data and a plurality of second learning data collected by the collection unit 101.

The learning unit 103 uses the sensor information as an input and constructs a first neural network model for estimating information about the printing paper corresponding to the sensor information.

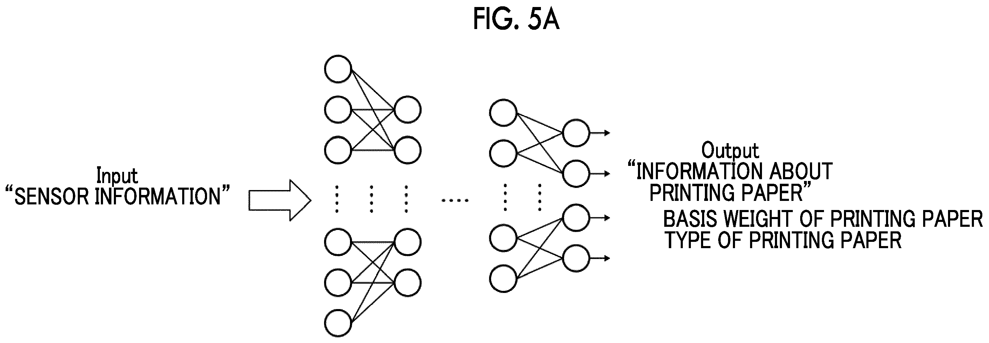

Specifically, the trained first neural network model receives an input of sensor information including a sensor output, and outputs at least one of a basis weight of the printing paper or a type of the printing paper corresponding to the sensor information (see FIG. 5A). Deep learning can be used as an example of a learning algorithm, and a first neural network model may be constructed such that, in a case where sensor information of first learning data is input, information about the printing paper in the first learning data is output.

More specifically, the sensor information of the first learning data may be used as an input, and the information about the printing paper may be estimated as an output of the model, and the estimated information of the printing paper may be compared with information about the printing paper in the first learning data to calculate an error in the information about the printing paper, and parameters of the model may be updated so as to minimize an error value.

The learning unit 103 uses input information as an input based on a plurality of second learning data, and constructs a second neural network model for estimating the fixing temperature of the fixing device corresponding to the input information.

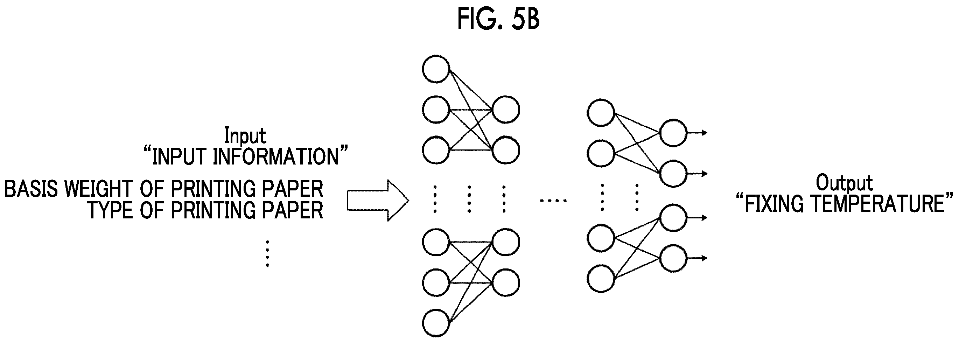

Specifically, the trained second neural network model receives an input of input information including at least one of the basis weight of the printing paper or the type of the printing paper, and outputs a fixing temperature of the fixing device corresponding to the input information (see FIG. 5B). Deep learning can be used as an example of a learning algorithm, and a second neural network model may be constructed such that, in a case where input information of second learning data is input, a fixing temperature of the second learning data is output.

More specifically, the input information of the second learning data may be used as an input, and the fixing temperature of the fixing device may be estimated as an output of the model, and the estimated fixing temperature of the fixing device may be compared with a fixing temperature of the fixing device in the second learning data to calculate an error in the fixing temperature of the fixing device, and parameters of the model may be updated so as to minimize an error value.

Here, a correlation between various types of information included in the input information and the fixing temperature of the fixing device will be described.

The optimum fixing temperature for maintaining the image quality of the printed image varies depending on the combination of the basis weight of the printing paper and the type of printing paper. Therefore, there is a correlation between the basis weight of the printing paper and the type of the printing paper and the fixing temperature of the fixing device.

The model storage unit 104 stores a trained first neural network model and a trained second neural network model.

The reception unit 105 receives a sensor output in a new print job to be estimated.

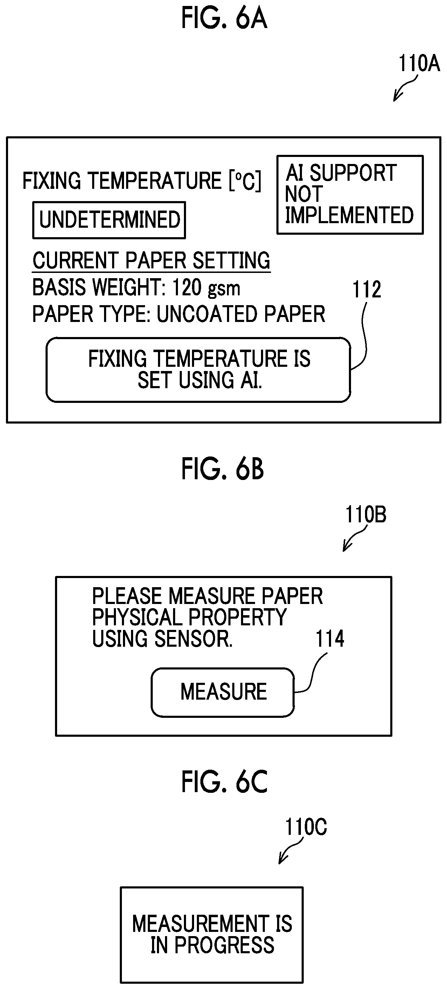

Specifically, the reception unit 105 displays a display screen 110A as shown in FIG. 6A on the user interface 22 of the printing apparatus 12.

In a case where the reception unit 105 receives an operation of pressing a button 112 from the user to provide an instruction to set the fixing temperature on the display screen 110A, the reception unit 105 displays a display screen 110B as shown in FIG. 6B on the user interface 22 of the printing apparatus 12.

In a case where the reception unit 105 receives an operation of pressing a button 114 from the user to provide an instruction to measure physical properties of the printing paper using a sensor on the display screen 110B, the reception unit 105 displays a display screen 110C representing that the measurement is in progress, as shown in FIG. 6C, on the user interface 22 of the printing apparatus 12.

In addition, the reception unit 105 acquires a sensor output from a sensor provided for the printing paper accommodated in a paper accommodation portion (not shown) in the printing unit 24.

The first estimation unit 106A estimates information about the printing paper corresponding to the sensor information including the received sensor output by using the trained first neural network model stored in the model storage unit 104.

Specifically, various types of information included in the acquired sensor information are converted into a data structure (for example, a scalar value or a vector) that can be input to the trained first neural network model and input to the trained first neural network model, and the information about the printing paper is estimated from the output of the trained model.

The second estimation unit 106B acquires input information including the information about the printing paper estimated by the first estimation unit 106A.

The input information includes information about the printing paper. The information about the printing paper may include a basis weight of the printing paper or a type of the printing paper. For example, the basis weight "126 gsm" of the printing paper and the type "coated paper" of the printing paper estimated by the first estimation unit 106A are acquired.

The second estimation unit 106B estimates the fixing temperature of the fixing device 9 corresponding to the acquired input information by using the trained second neural network model stored in the model storage unit 104.

Specifically, various types of information included in the acquired input information are converted into a data structure (for example, a scalar value or a vector) that can be input to the trained second neural network model and input to the trained second neural network model, and the fixing temperature of the fixing device 9 is estimated from the output of the trained model.

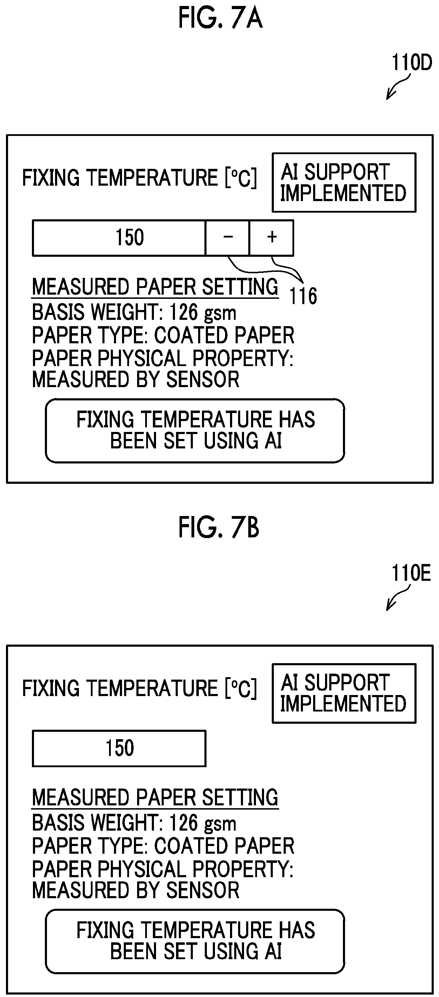

The output unit 107 presents the estimated fixing temperature of the fixing device 9 to the user by displaying a display screen 110D as shown in FIG. 7A on the user interface 22 of the printing apparatus 12. Accordingly, the user can ascertain the estimated fixing temperature of the fixing device 9.

In addition, the output unit 107 receives an operation of pressing the adjustment button 116 from the user on the display screen 110D, and adjusts the estimated fixing temperature of the fixing device 9. In addition, the output unit 107 outputs the adjusted fixing temperature of the fixing device 9 to the printing apparatus 12, and sets the output adjusted fixing temperature as the fixing temperature of the fixing device 9 of the printing apparatus 12. Here, the adjustment button 116 is an example of an adjustment request. The estimated fixing temperature of the fixing device 9 may be displayed on a display screen 110E as shown in FIG. 7B, and the estimated fixing temperature of the fixing device 9 may be made unadjustable.

Next, specific processing performed by the information processing system 10 according to the present exemplary embodiment configured as described above will be described.

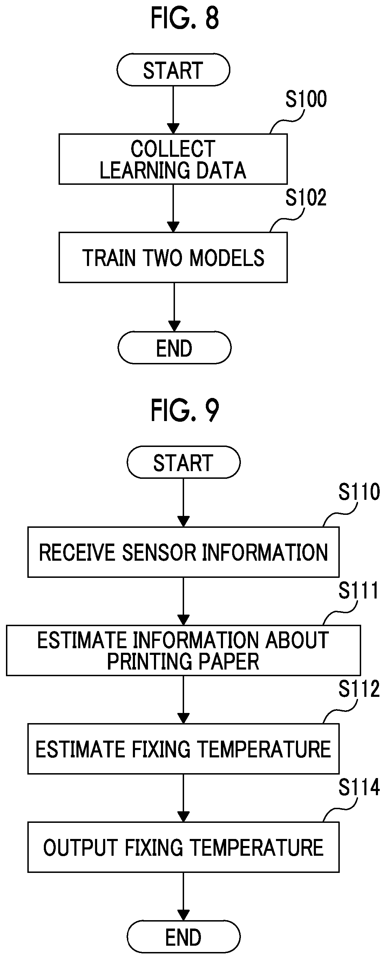

First, in the client computer 14, the CPU 14A reads out a learning program from the ROM 14B or the storage 14D, and loads the learning program into the RAM 14C and executes the learning program, thereby performing a learning process shown in FIG. 8.

In step S100, as the collection unit 101, the CPU 14A collects, from the experimental information held by the management apparatus 11, pairs of sensor information that includes an output of the sensor for the printing paper and information about the printing paper, and stores the pairs in the learning data storage unit 102 as the first learning data.

In addition, as the collection unit 101, the CPU 14A collects, from the experimental information held by the management apparatus 11, pairs of input information that includes information about the printing paper and a fixing temperature of the fixing device in the printing apparatus, and stores the pairs in the learning data storage unit 102 as the second learning data.

In step S102, as the learning unit 103, the CPU 14A uses sensor information as an input based on a plurality of first learning data, trains a first neural network model for estimating information about the printing paper corresponding to the sensor information, and stores the first neural network model in the model storage unit 104.

In addition, as the learning unit 103, the CPU 14A uses input information as an input based on a plurality of second learning data, trains a second neural network model for estimating a fixing temperature of the fixing device corresponding to the input information, stores the second neural network model in the model storage unit 104, and ends the learning process.

Next, in the client computer 14, the CPU 14A reads out an estimation program from the ROM 14B or the storage 14D and loads the estimation program into the RAM 14C and executes the estimation program, thereby performing an estimation process shown in FIG. 9. In this case, it is assumed that, on the display screen 110A, the operation of pressing the button 112 to provide an instruction to set the fixing temperature is received from the user, and then, on the display screen 110B, the operation of pressing the button 114 to provide an instruction to measure the physical properties of the printing paper using the sensor is received from the user.

In step S110, as the reception unit 105, the CPU 14A receives sensor information including a sensor output from a sensor provided for the printing paper accommodated in a paper accommodation portion (not shown) in the printing unit 24.

In step S111, as the first estimation unit 106A, the CPU 14A estimates information about the printing paper corresponding to the received sensor information by using the trained first neural network model stored in the model storage unit 104.

In step S112, as the second estimation unit 106B, the CPU 14A estimates a fixing temperature of the fixing device 9 corresponding to the input information including the information about the printing paper estimated in step S111 by using the trained second neural network model stored in the model storage unit 104.

In step S114, as the output unit 107, the CPU 14A presents the estimated fixing temperature of the fixing device 9 to the user, outputs the estimated fixing temperature to the printing apparatus 12, and ends the estimation process. The printing apparatus 12 sets the fixing temperature of the fixing device 9 input from the client computer 14 and performs printing on the printing paper.

By performing the process in this way, the fixing temperature of the fixing device according to the printing paper may be predicted by using the output of the sensor for the printing paper.

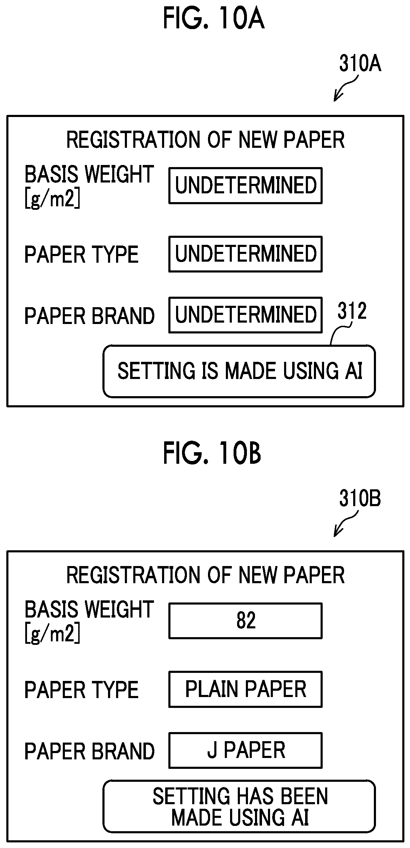

In a case where the estimation process is performed, the user may manually input the basis weight of the printing paper, the type of the printing paper, and the brand of the printing paper. For example, the reception unit 105 may display a display screen 310A as shown in FIG. 10A on the user interface 22 of the printing apparatus 12, receive an input of the basis weight of the printing paper, the type of the printing paper, and the brand of the printing paper from the user, and receive an operation of pressing a button 312 to provide an instruction to predict the physical properties of the printing paper. Then, the reception unit 105 may receive sensor information including a sensor output from a sensor provided for the printing paper accommodated in a paper accommodation portion (not shown) in the printing unit 24, estimate information about the printing paper corresponding to the received sensor information using the trained first neural network model, display a display screen 310B as shown in FIG. 10B on the user interface 22 of the printing apparatus 12, and display the estimated basis weight of the printing paper, the estimated type of the printing paper, and the estimated brand of the printing paper.

### [Second Exemplary Embodiment]

Next, an information processing system according to a second exemplary embodiment will be described. Since the information processing system according to the second exemplary embodiment has the same configuration as the first exemplary embodiment, the identical reference numerals are assigned and the description thereof will be omitted.

The second exemplary embodiment is different from the first exemplary embodiment in that a transfer voltage of the transfer unit corresponding to input information is estimated using a second neural network model.

The collection unit 101 of the client computer 14 according to the second exemplary embodiment collects first learning data including a pair of sensor information that includes an output of a sensor for the printing paper and information about the printing paper, the pair being experimentally obtained.

The collection unit 101 collects second learning data including a pair of input information that includes information about the printing paper and a transfer voltage of a transfer unit in a printing apparatus, the pair being experimentally obtained. For example, a developer of the printing apparatus experimentally obtains a pair of input information that includes information about the printing paper and an optimum transfer voltage of the transfer unit in the printing apparatus for the input information.

The management apparatus 11 has experimental information including a pair of input information that includes information about the printing paper and a transfer voltage of a transfer unit in a printing apparatus, the pair being experimentally obtained.

The collection unit 101 collects, from the experimental information held by the management apparatus 11, pairs of input information that includes information about the printing paper and a transfer voltage of the transfer unit in the printing apparatus, as the second learning data.

The learning unit 103 uses the sensor information as an input and constructs a first neural network model for estimating information about the printing paper corresponding to the sensor information.

The learning unit 103 uses input information as an input based on a plurality of second learning data, and constructs a second neural network model for estimating the transfer voltage of the transfer unit corresponding to the input information.

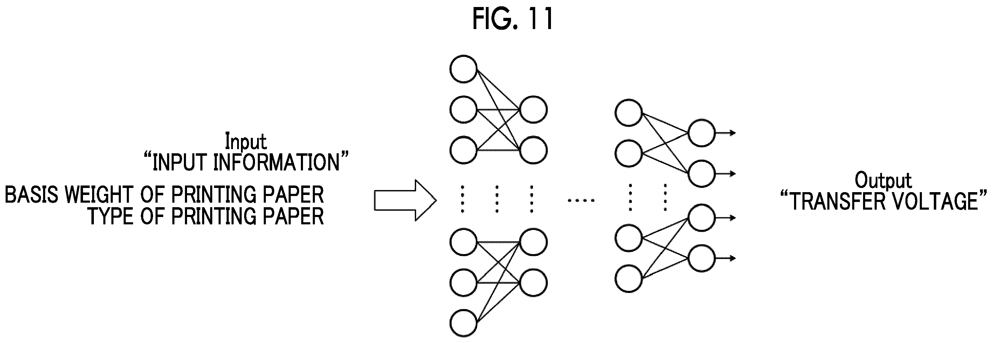

Specifically, the trained second neural network model receives an input of input information including at least one of the basis weight of the printing paper or the type of the printing paper, and outputs a transfer voltage of the transfer unit corresponding to the input information (see FIG. 11). Deep learning can be used as an example of a learning algorithm, and a second neural network model may be constructed such that, in a case where input information of second learning data is input, a fixing temperature of the second learning data is output.

More specifically, the input information of the second learning data may be used as an input, and the transfer voltage of the transfer unit may be estimated as an output of the model, and the estimated transfer voltage of the transfer unit may be compared with a transfer voltage of the transfer unit in the second learning data to calculate an error in the transfer voltage of the transfer unit, and parameters of the model may be updated so as to minimize an error value.

Here, a correlation between various types of information included in the input information and the transfer voltage of the transfer unit will be described.

The optimum transfer voltage for maintaining the image quality of the printed image varies depending on the combination of the basis weight of the printing paper and the type of printing paper. Therefore, there is a correlation between the basis weight of the printing paper and the type of the printing paper and the transfer voltage of the transfer unit.

The model storage unit 104 stores a trained first neural network model and a trained second neural network model.

The reception unit 105 receives a sensor output in a new print job to be estimated.

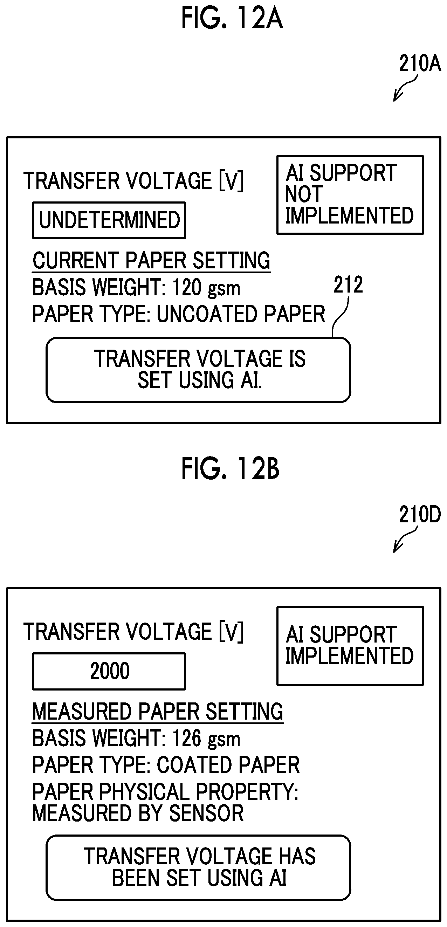

Specifically, the reception unit 105 displays a display screen 210A as shown in FIG. 12A on the user interface 22 of the printing apparatus 12.

In a case where the reception unit 105 receives an operation of pressing a button 212 from the user to provide an instruction to set the transfer voltage on the display screen 210A, the reception unit 105 displays the display screen 110B as shown in FIG. 6B on the user interface 22 of the printing apparatus 12.

In a case where the reception unit 105 receives an operation of pressing a button 114 from the user to provide an instruction to measure physical properties of the printing paper using a sensor on the display screen 110B, the reception unit 105 displays the display screen 110C as shown in FIG. 6C on the user interface 22 of the printing apparatus 12.

In addition, the reception unit 105 acquires a sensor output from a sensor provided for the printing paper accommodated in a paper accommodation portion (not shown) in the printing unit 24.

The first estimation unit 106A estimates information about the printing paper corresponding to the sensor information including the received sensor output by using the trained first neural network model stored in the model storage unit 104.

The second estimation unit 106B acquires input information including the information about the printing paper estimated by the first estimation unit 106A.

The input information includes information about the printing paper. The information about the printing paper may include a basis weight of the printing paper or a type of the printing paper. For example, the basis weight "126 gsm" of the printing paper and the type "coated paper" of the printing paper estimated by the first estimation unit 106A are acquired.

The second estimation unit 106B estimates the transfer voltage of the transfer unit 230 corresponding to the acquired input information by using the trained second neural network model stored in the model storage unit 104.

Specifically, various types of information included in the acquired input information are converted into a data structure (for example, a scalar value or a vector) that can be input to the trained second neural network model and input to the trained second neural network model, and the transfer voltage of the transfer unit 230 is estimated from the output of the trained model.

The output unit 107 presents the estimated transfer voltage of the transfer unit 230 to the user by displaying a display screen 210D as shown in FIG. 12B on the user interface 22 of the printing apparatus 12. Accordingly, the user can ascertain the estimated transfer voltage of the transfer unit 230. In addition, the output unit 107 outputs the estimated transfer voltage of the transfer unit 230 to the printing apparatus 12, and sets the output estimated transfer voltage as the transfer voltage of the transfer unit 230 of the printing apparatus 12.

Next, specific processing performed by the information processing system 10 according to the present exemplary embodiment configured as described above will be described.

First, in the client computer 14, the CPU 14A reads out a learning program from the ROM 14B or the storage 14D, and loads the learning program into the RAM 14C and executes the learning program, thereby performing the learning process shown in FIG. 8.

In step S100, as the collection unit 101, the CPU 14A collects, from the experimental information held by the management apparatus 11, pairs of sensor information that includes an output of the sensor for the printing paper and information about the printing paper, and stores the pairs in the learning data storage unit 102 as the first learning data.

In addition, as the collection unit 101, the CPU 14A collects, from the experimental information held by the management apparatus 11, pairs of input information that includes information about the printing paper and a transfer voltage of the transfer unit in the printing apparatus, and stores the pairs in the learning data storage unit 102 as the second learning data.

In step S102, as the learning unit 103, the CPU 14A uses sensor information as an input based on a plurality of first learning data, trains a first neural network model for estimating information about the printing paper corresponding to the sensor information, and stores the first neural network model in the model storage unit 104.

In addition, as the learning unit 103, the CPU 14A uses input information as an input based on a plurality of second learning data, trains a second neural network model for estimating a transfer voltage of the transfer unit corresponding to the input information, stores the second neural network model in the model storage unit 104, and ends the learning process.

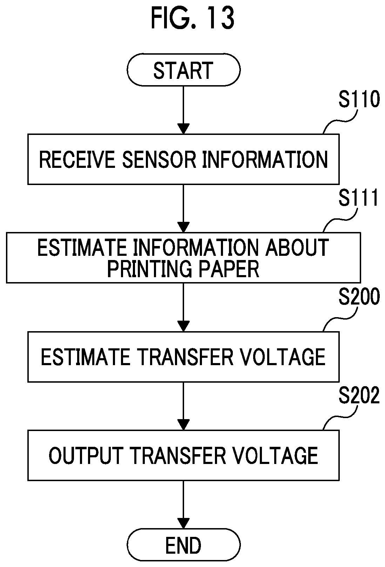

Next, in the client computer 14, the CPU 14A reads out an estimation program from the ROM 14B or the storage 14D and loads the estimation program into the RAM 14C and executes the estimation program, thereby performing an estimation process shown in FIG. 13. In this case, it is assumed that, on the display screen 210A, the operation of pressing the button 212 to provide an instruction to set the transfer voltage is received from the user, and then, on the display screen 110B, the operation of pressing the button 114 to provide an instruction to measure the physical properties of the printing paper using the sensor is received from the user.

In step S110, as the reception unit 105, the CPU 14A receives sensor information including a sensor output from a sensor provided for the printing paper accommodated in a paper accommodation portion (not shown) in the printing unit 24.

In step S111, as the first estimation unit 106A, the CPU 14A estimates information about the printing paper corresponding to the received sensor information by using the trained first neural network model stored in the model storage unit 104.

In step S112, as the second estimation unit 106B, the CPU 14A estimates a transfer voltage of the transfer unit 230 corresponding to the input information including the information about the printing paper estimated in step S111 by using the trained second neural network model stored in the model storage unit 104.

In step S114, as the output unit 107, the CPU 14A presents the estimated transfer voltage of the transfer unit 230 to the user, outputs the estimated fixing temperature to the printing apparatus 12, and ends the estimation process. The printing apparatus 12 sets the transfer voltage of the transfer unit 230 input from the client computer 14 and performs printing on the printing paper.

By performing the process in this way, the transfer voltage of the transfer unit according to the printing paper may be predicted by using the output of the sensor for the printing paper.

### [Third Exemplary Embodiment]

Next, an information processing system according to a third exemplary embodiment will be described. Since the information processing system according to the third exemplary embodiment has the same configuration as the first exemplary embodiment, the identical reference numerals are assigned and the description thereof will be omitted.

The third exemplary embodiment is different from the first exemplary embodiment in that a plurality of candidates of information about the printing paper to be newly printed are acquired from the output of the first neural network model, and a screen for receiving a selection of the candidates of the information about the printing paper from the user is displayed.

In the third exemplary embodiment, the information about the printing paper further includes a brand of the printing paper. The paper brand includes a name, a model number, and the like of the printing paper determined by a manufacturer of the printing paper.

The first estimation unit 106A of the client computer 14 according to the third exemplary embodiment estimates a plurality of candidates of information about the printing paper corresponding to the sensor information including the received sensor output by using the trained first neural network model stored in the model storage unit 104.

Specifically, various types of information included in the acquired sensor information are converted into a data structure (for example, a scalar value or a vector) that can be input to the trained first neural network model and input to the trained first neural network model, and a plurality of pairs of the candidates of the information about the printing paper and percentages indicating probabilities of the candidates are estimated from the output of the trained model.

For example, for each of the basis weight of the printing paper, the type of the printing paper, and the brand of the printing paper included in the information about the printing paper, a plurality of candidates and the probabilities of the respective candidates are estimated.

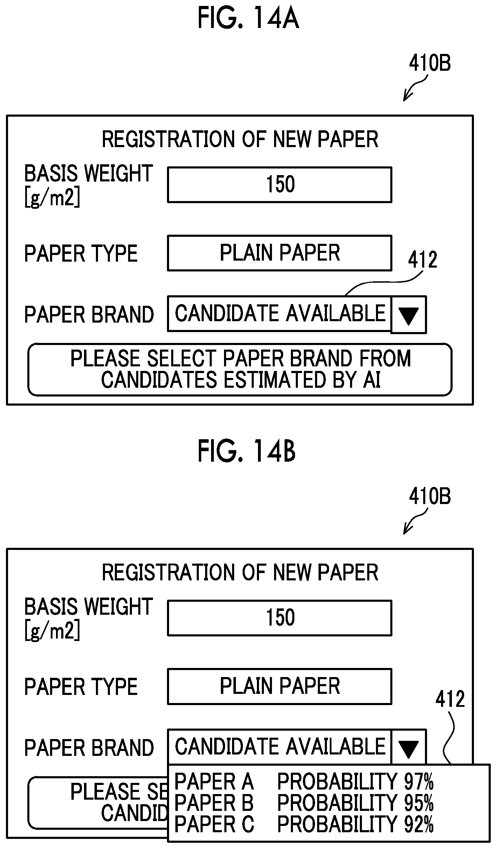

In the present exemplary embodiment, the output unit 107 presents the estimated candidates of the information about the printing paper to the user by displaying a display screen 410B including a selection box 412 as shown in FIG. 14A on the user interface 22 of the printing apparatus 12. FIG. 14A shows an example in which a plurality of candidates are presented for the brand of the printing paper.

As shown in FIG. 14B, a user's selection is received from a plurality of candidates of the brand of the printing paper displayed in the selection box 412. FIG. 14B shows an example in which a plurality of candidates of the brand of the printing paper are displayed in the selection box 412 together with the percentages indicating the probabilities of the candidates.

The second estimation unit 106B estimates a fixing temperature corresponding to the information about the printing paper including the selected candidate by using the trained second neural network model stored in the model storage unit 104.

Since the configuration and the operation according to the third exemplary embodiment are the same as the configuration and the operation of the first exemplary embodiment, the description thereof will be omitted.

### <Modification Example>

The present invention is not limited to the above-described exemplary embodiment, and various modifications and applications are possible without departing from the gist of the present invention.

In the above-described exemplary embodiment, although a case where the various display screens are displayed on the user interface of the printing apparatus and the input from the user is received has been described as an example, the present invention is not limited to this. The display screen may be displayed on a user interface of a user terminal (not shown) held by the user, and the input from the user may be received.

In addition, although a case where the various types of input information are received and the fixing temperature of the fixing device or the transfer voltage of the transfer unit is estimated has been described as an example, it may also be possible to receive only a portion of the various types of input information rather than receiving all of the various types of input information and estimate the fixing temperature of the fixing device or the transfer voltage of the transfer unit.

In addition, the technique of acquiring a plurality of candidates of information about the printing paper to be newly printed from the output of the first neural network model and displaying a screen for receiving a selection of the candidates of the information about the printing paper from the user, which is described in the third exemplary embodiment, may also be applied to the above-described second exemplary embodiment in which the transfer voltage is estimated.

In addition, although a case where the client computer 14 trains the model and estimates the fixing temperature of the fixing device or the transfer voltage of the transfer unit has been described as an example, it may also be configured as being separated into a learning device that trains the model and an estimation device that estimates the fixing temperature of the fixing device or the transfer voltage of the transfer unit.

In the exemplary embodiments, the processes are performed by any computer. The computer may perform the processes by using a processor serving as hardware, a program serving as software, or combination of these.

In this case, the processor is configured to perform the processes in the exemplary embodiments in cooperation with the program and may function as a unit or a means in the exemplary embodiments. The order in which the processor performs the processes is not limited to the described order and may be changed appropriately. The computer may be a general-purpose computer, an application specific computer, a workstation, or another system capable of performing the processes.

The processor may be composed of one or more pieces of hardware, and the type of the hardware is not limited. For example, the processor may be composed of hardware such as a central processing unit (CPU), a micro processing unit (MPU), a programmable logic device such as a field programmable gate array (FPGA), a dedicated circuit for performing specific processing such as an application specific integrated circuit (ASIC), a graphics processing unit (GPU), or a neural processing unit (NPU). Regarding the type of the hardware, different types of hardware may be combined. If multiple pieces of hardware are configured to perform one or more processes of the processor, the multiple pieces of hardware may be present in apparatuses physically away from each other or may be present in one apparatus. In each of exemplary embodiments, the order in which the processor performs the processes is not limited to the order described above and may be changed appropriately. The hardware is composed of electric circuitry in which circuit elements such as semiconductor devices are combined, or the like.

Further, the program may be software such as firmware or microcode. The program may be, for example, a program module group, and the functions thereof may be implemented by processors configured to implement the respective functions. The program may be program code or multiple code segments stored in one or more non-transitory computer readable media (for example, a storage medium or another storage). The program may be stored in such a divided manner in multiple non-transitory computer readable media present in apparatuses physically away from each other. The program code or the code segments may represent a procedure, a function, a sub program, a routine, a subroutine, a module, a software package, a class or any combination of instructions, data structures, or program statements. The program code or the code segment may be connected to another code segment or a hardware circuit by transmitting and/or receiving information, data, an argument, a parameter, or memory content.

In addition, the "system" in the present exemplary embodiment is described as an example of a system configured to include a plurality of apparatus, but may be configured to include a single apparatus having functions of some parts of the plurality of apparatus.

The processes performed by the client computer 14 according to the above exemplary embodiment may be processes performed by software, processes performed by hardware, or a combination of both. In addition, the processes performed by the client computer 14 may be stored in a storage medium as a program and distributed.

In addition, the present disclosure is not limited to the above description, and various modifications other than the above description may be made without departing from the gist thereof.

Regarding the above exemplary embodiments, the following supplementary notes will be further disclosed.
(((1))) An information processing system comprising:
   a processor configured to:
   input, to a first trained model that has been trained in advance in order to output information about printing paper in a case of receiving sensor information including an output of a sensor for the printing paper, new sensor information including an output of the sensor for printing paper to be newly printed, and output information about the printing paper to be newly printed; and
   input, to a second trained model that has been trained in advance in order to output a fixing temperature of a fixing device in a printing apparatus in a case of receiving input information including information about printing paper, new input information including the information about the printing paper output from the first trained model, and output a fixing temperature of the fixing device in the printing apparatus that is to perform a new print job.
(((2))) An information processing system comprising:
   a processor configured to:
   input, to a first trained model that has been trained in advance in order to output information about printing paper in a case of receiving sensor information including an output of a sensor for the printing paper, new sensor information including an output of the sensor for printing paper to be newly printed, and output information about the printing paper to be newly printed; and
   input, to a second trained model that has been trained in advance in order to output a transfer voltage to be applied to a transfer unit in a printing apparatus in a case of receiving input information including information about printing paper, new input information including the information about the printing paper output from the first trained model, and output a transfer voltage to be applied to the transfer unit in the printing apparatus that is to perform a new print job.
(((3))) The information processing system according to (((1))) or (((2))), wherein the processor is configured to:
   output a plurality of candidates of the information about the printing paper to be newly printed by inputting the new sensor information to the first trained model;
   on the printing apparatus that is to perform the new print job or a user terminal, display a screen for receiving a selection of the output candidates of the information about the printing paper from a user; and
   input the received selection of the candidates of the information about the printing paper to the second trained model.
(((4))) The information processing system according to any one of (((1))) to (((3))), wherein the processor is further configured to:
   on the printing apparatus that is to perform the new print job or a user terminal, display a screen for receiving a request for adjusting the output fixing temperature of the fixing device from a user.
(((5))) The information processing system according to any one of (((1))) to (((4))),
   wherein the information about the printing paper includes a basis weight of the printing paper, a type of the printing paper, or a brand of the printing paper.
(((6))) An information processing program causing a computer to execute:
   inputting, to a first trained model that has been trained in advance in order to output information about printing paper in a case of receiving sensor information including an output of a sensor for the printing paper, new sensor information including an output of the sensor for printing paper to be newly printed, and outputting information about the printing paper to be newly printed; and
   inputting, to a second trained model that has been trained in advance in order to output a fixing temperature of a fixing device in a printing apparatus in a case of receiving input information including information about printing paper, new input information including the information about the printing paper output from the first trained model, and outputting a fixing temperature of the fixing device in the printing apparatus that is to perform a new print job.
(((7))) An information processing program causing a computer to execute:
   inputting, to a first trained model that has been trained in advance in order to output information about printing paper in a case of receiving sensor information including an output of a sensor for the printing paper, new sensor information including an output of the sensor for printing paper to be newly printed, and outputting information about the printing paper to be newly printed; and
   inputting, to a second trained model that has been trained in advance in order to output a transfer voltage to be applied to a transfer unit in a printing apparatus in a case of receiving input information including information about printing paper, new input information including the information about the printing paper output from the first trained model, and outputting a transfer voltage to be applied to the transfer unit in the printing apparatus that is to perform a new print job.

According to (((1))), it is possible to predict the fixing temperature of the fixing device according to the printing paper by using the output of the sensor for the printing paper.

According to (((2))), it is possible to predict the transfer voltage of the transfer unit according to the printing paper by using the output of the sensor for the printing paper.

According to (((3))), it is possible to predict the fixing temperature of the fixing device or the transfer voltage of the transfer unit in accordance with the information about the printing paper received from the user.

According to (((4))), it is possible to receive a request for adjusting the predicted fixing temperature of the fixing device from the user.

According to (((5))), it is possible to predict the fixing temperature of the fixing device or the transfer voltage of the transfer unit according to the basis weight of the printing paper, the type of the printing paper, or the brand of the printing paper.

According to (((6))), it is possible to predict the fixing temperature of the fixing device according to the printing paper by using the output of the sensor for the printing paper.

According to (((7))), it is possible to predict the transfer voltage of the transfer unit according to the printing paper by using the output of the sensor for the printing paper.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

9: fixing device
10: information processing system
11: management apparatus
12: printing apparatus
14: client computer
24: printing unit
101: collection unit
102: learning data storage unit
103: learning unit
104: model storage unit
105: reception unit
106: estimation unit
106A: first estimation unit
106B: second estimation unit
107: output unit
116: adjustment button
230: transfer unit

## Claims

1. An information processing system comprising:
a processor configured to:
input, to a first trained model that has been trained in advance in order to output information about printing paper in a case of receiving sensor information including an output of a sensor for the printing paper, new sensor information including an output of the sensor for printing paper to be newly printed, and output information about the printing paper to be newly printed; and
input, to a second trained model that has been trained in advance in order to output a fixing temperature of a fixing device in a printing apparatus in a case of receiving input information including information about printing paper, new input information including the information about the printing paper output from the first trained model, and output a fixing temperature of the fixing device in the printing apparatus that is to perform a new print job.

2. An information processing system comprising:
a processor configured to:
input, to a first trained model that has been trained in advance in order to output information about printing paper in a case of receiving sensor information including an output of a sensor for the printing paper, new sensor information including an output of the sensor for printing paper to be newly printed, and output information about the printing paper to be newly printed; and
input, to a second trained model that has been trained in advance in order to output a transfer voltage to be applied to a transfer unit in a printing apparatus in a case of receiving input information including information about printing paper, new input information including the information about the printing paper output from the first trained model, and output a transfer voltage to be applied to the transfer unit in the printing apparatus that is to perform a new print job.

3. The information processing system according to claim 1 or 2, wherein the processor is configured to:
output a plurality of candidates of the information about the printing paper to be newly printed by inputting the new sensor information to the first trained model;
on the printing apparatus that is to perform the new print job or a user terminal, display a screen for receiving a selection of the output candidates of the information about the printing paper from a user; and
input the received selection of the candidates of the information about the printing paper to the second trained model.

4. The information processing system according to any one of claims 1 to 3, wherein the processor is further configured to:
on the printing apparatus that is to perform the new print job or a user terminal, display a screen for receiving a request for adjusting the output fixing temperature of the fixing device from a user.

5. The information processing system according to any one of claims 1 to 4,
wherein the information about the printing paper includes a basis weight of the printing paper, a type of the printing paper, or a brand of the printing paper.

6. An information processing program causing a computer to execute:
inputting, to a first trained model that has been trained in advance in order to output information about printing paper in a case of receiving sensor information including an output of a sensor for the printing paper, new sensor information including an output of the sensor for printing paper to be newly printed, and outputting information about the printing paper to be newly printed; and
inputting, to a second trained model that has been trained in advance in order to output a fixing temperature of a fixing device in a printing apparatus in a case of receiving input information including information about printing paper, new input information including the information about the printing paper output from the first trained model, and outputting a fixing temperature of the fixing device in the printing apparatus that is to perform a new print job.

7. An information processing method comprising:
inputting, to a first trained model that has been trained in advance in order to output information about printing paper in a case of receiving sensor information including an output of a sensor for the printing paper, new sensor information including an output of the sensor for printing paper to be newly printed, and outputting information about the printing paper to be newly printed; and
inputting, to a second trained model that has been trained in advance in order to output a fixing temperature of a fixing device in a printing apparatus in a case of receiving input information including information about printing paper, new input information including the information about the printing paper output from the first trained model, and outputting a fixing temperature of the fixing device in the printing apparatus that is to perform a new print job.

## Amended claims

### Amended claims in accordance with Rule 137(2) EPC.

1. An information processing system (10) comprising:
a processor (11A, 14A) configured to:
input, to a first trained model that has been trained in advance in order to output information about printing paper in a case of receiving sensor information including an output of a sensor for the printing paper, new sensor information including an output of the sensor for printing paper to be newly printed, and output information about the printing paper to be newly printed; and
input, to a second trained model that has been trained in advance in order to output a fixing temperature of a fixing device (9) in a printing apparatus (12) that uses an electrophotographic method in a case of receiving input information including information about printing paper, new input information including the information about the printing paper output from the first trained model, and output a fixing temperature of the fixing device (9) in the printing apparatus (12) that is to perform a new print job,
the information processing system being **characterized in that**:
the information about the printing paper to be newly printed which is output from the first trained model is input to the second trained model, and the second trained model outputs the fixing temperature of the fixing device (9) corresponding the information about the printing paper to be newly printed.

2. An information processing system (10) comprising:
a processor (11A, 14A) configured to:
input, to a first trained model that has been trained in advance in order to output information about printing paper in a case of receiving sensor information including an output of a sensor for the printing paper, new sensor information including an output of the sensor for printing paper to be newly printed, and output information about the printing paper to be newly printed; and
input, to a second trained model that has been trained in advance in order to output a transfer voltage to be applied to a transfer unit (230) in a printing apparatus (12) that uses an electrophotographic method in a case of receiving input information including information about printing paper, new input information including the information about the printing paper output from the first trained model, and output a transfer voltage to be applied to the transfer unit (230) in the printing apparatus (12) that is to perform a new print job,
the information processing system being **characterized in that**:
the information about the printing paper to be newly printed which is output from the first trained model is input to the second trained model, and the second trained model outputs the transfer voltage to be applied to the transfer unit (230) corresponding the information about the printing paper to be newly printed.

3. The information processing system (10) according to claim 1 or 2, wherein the processor (11A, 14A) is configured to:
output a plurality of candidates of the information about the printing paper to be newly printed by inputting the new sensor information to the first trained model;
on the printing apparatus (12) that is to perform the new print job or a user terminal (14), display a screen for receiving a selection of the output candidates of the information about the printing paper from a user; and
input the received selection of the candidates of the information about the printing paper to the second trained model.

4. The information processing system (10) according to any one of claims 1 or 3, wherein the processor (11A, 14A) is further configured to:
on the printing apparatus (12) that is to perform the new print job or a user terminal (14), display a screen for receiving a request for adjusting the output fixing temperature of the fixing device (9) from a user.

5. The information processing system (10) according to any one of claims 1 to 4,
wherein the information about the printing paper includes a basis weight of the printing paper, a type of the printing paper, or a brand of the printing paper.

6. An information processing program causing a computer to execute:
inputting, to a first trained model that has been trained in advance in order to output information about printing paper in a case of receiving sensor information including an output of a sensor for the printing paper, new sensor information including an output of the sensor for printing paper to be newly printed, and outputting information about the printing paper to be newly printed; and
inputting, to a second trained model that has been trained in advance in order to output a fixing temperature of a fixing device (9) in a printing apparatus (12) that uses an electrophotographic method in a case of receiving input information including information about printing paper, new input information including the information about the printing paper output from the first trained model, and outputting a fixing temperature of the fixing device (9) in the printing apparatus (12) that is to perform a new print job,
the information processing program being **characterized in that**:
the information about the printing paper to be newly printed which is output from the first trained model is input to the second trained model, and the second trained model outputs the fixing temperature of the fixing device (9) corresponding the information about the printing paper to be newly printed.

7. An information processing method, carried out by a processor (11A, 14A), comprising:
inputting, to a first trained model that has been trained in advance in order to output information about printing paper in a case of receiving sensor information including an output of a sensor for the printing paper, new sensor information including an output of the sensor for printing paper to be newly printed, and outputting information about the printing paper to be newly printed; and
inputting, to a second trained model that has been trained in advance in order to output a fixing temperature of a fixing device (9) in a printing apparatus (12) that uses an electrophotographic method in a case of receiving input information including information about printing paper, new input information including the information about the printing paper output from the first trained model, and outputting a fixing temperature of the fixing device (9) in the printing apparatus (12) that is to perform a new print job,
the information processing method being **characterized in that**:
the information about the printing paper to be newly printed which is output from the first trained model is input to the second trained model, and the second trained model outputs the fixing temperature of the fixing device (9) corresponding the information about the printing paper to be newly printed.
